# EUROPEAN PATENT SPECIFICATION

(11) **EP 1 127 015 B1**
(45) Date of publication and mention of the grant of the patent: **22.09.2004**
(21) Application number: 99953457.1
(22) Date of filing: 02.11.1999
(51) Int. Cl.: B65D 73/00, B31D 1/02

(54) **ADHESIVE HANG TAB**
KLEBEBAND ZUM AUFHÄNGEN VON GEGENSTÄNDEN
CROCHET ADHESIF

(30) Priority: 03.11.1998 US 106785 P
(43) Date of publication of application: 29.08.2001
(73) Proprietor: Pomerantz, Carl, Beaconsfield, Quebec H9W 4K3 (CA)
(72) Inventor: Pomerantz, Carl, Beaconsfield, Quebec H9W 4K3 (CA)
(74) Representative: Schuhmann, Albrecht
(86) International application number: PCT/CA1999/001018
(87) International publication number: WO 2000/026109

(56) References cited:
- US-A- 4 890 809
- US-A- 5 328 137

## Description

The present invention relates to tabs for supporting an object from a support, and more particularly to generally flat tabs that operate without being folded (hereafter referred to as "generally uniplanar tabs"), the tabs being provided with a pressure-sensitive coating on at least one of their two surfaces.

There are many models of adhesive tabs that are used to display products on peg hooks at retail. However, in generally uniplanar tabs and other conventional tab designs, the adhesive zone is generally of rectangular configuration. The reason for such configuration relates to simplicity of design and ease of manufacture.

There is known US 5542634 describing an adhesive generally uniplanar hang tab provided with channels in the adhesive zone to limit and arrest peel propagation. There are also known US patents 5020761, 4890809 and 4863128 describing various forms of generally uniplanar adhesive hang tabs.

Typically, the conventional production of uniplanar adhesive tabs uses a rotary die-cutting process, wherein a lamination consisting of a continuous strip of releasable paper liner, adhesive and flexible plastic are passed under a rotary die-cutting blade which will cut out the desired shape of the tab.

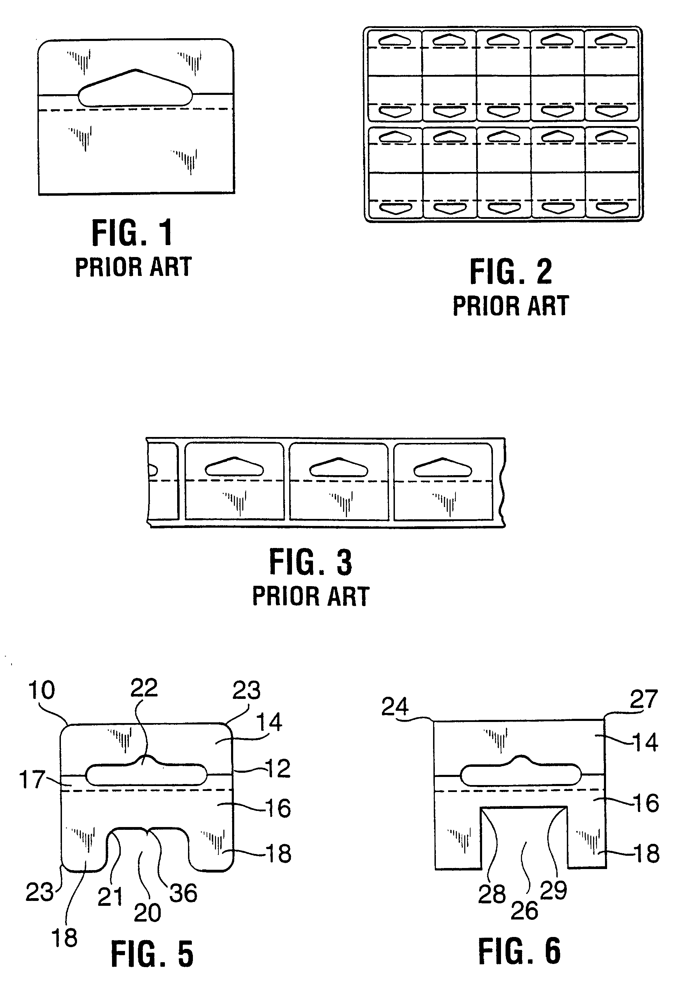

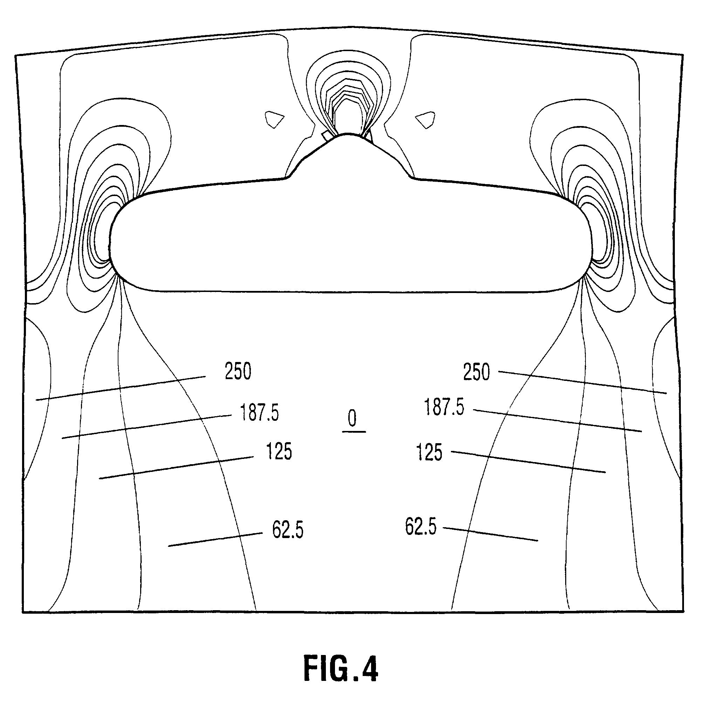

In the effort to economize on material between pieces, and to minimize tooling costs, it is often desirable to have adjacent pieces to share the same common cutting edges. As a result, while no material in the adhesive zones needs to be discarded, the final pieces have sharp comers (see Figs. 1 and 2) which is undesirable in use.

Using this conventional method, if rounded comers are desired, it is necessary to separate or space the layout of pieces on the tool so that comers of the final piece can be rounded (see Fig. 3). However, it then becomes necessary to discard the material between adjacent pieces, which produces undesirable and costly waste material.

Whether conventional comers are rounded or squared, the resulting adhesive zone of the tab is generally substantially rectangular.

US 5328137 describes a rather different form of display hanger, which, though formed from an initially flat sheet, must be manipulated into a different configuration in order to apply it to an object and suspend the hanger and object from a support. The hanger has bonded sections adjacent its top and bottom edges for application to the object to be supported, interconnected by side sections of the hanger. Located intermediate the two bonded sections and between the side sections is a portion adapted to be folded up out of the plane of the remainder of the hanger. This portion has a through aperture for supporting the hanger and object from a support peg or the like. When so folded, a substantial opening is left in the centre of the hanger. To aid in this manipulation, the central part of the lower bonded section is omitted to provide a gap.

An analysis made by the present inventor has shown that once an article is suspended by a generally uniplanar hang tab with the conventional rectangular adhesive zone, the shear forces in the adhesive zone are not distributed uniformly across the adhesive zone. Referring to Fig. 4, there is illustrated a two dimensional plane stress analysis conducted using Ansys Software version 5.5.1 using finite element analysis of 10,000 nodes of a conventionally shaped uniplanar hang tab made of a semi-rigid material with modulus of elasticity of 290,000 psi (2∗10⁹ Pascals) with Poisson ration of 0.4 and tab thickness of 0.014 inches (0.03556 cm).

For the purpose of this simulation, a one unit point load was applied upward to the top of the aperture, while the adhesive zone supported a flat body with a weight of one unit. As diagram of the shear load of Fig. 4 indicates, the stress distribution across the adhesive zone of the tab is such that the shear load stresses are concentrated in the laterally remote portions of the adhesive zone, while the lower mid-section of the adhesive zone experiences only minor shear stresses. This discovery indicates that the lower central portion of the adhesive zone of the tab contributes proportionally less by area to support the vertical load compared to laterally extreme portions of the adhesive zone. The analysis shows that the lower central portion comprising 33% of the adhesive zone area contributes less than 1% to support the vertical load.

The present invention is based on this discovery and provides an improved configuration of the adhesive zone resulting in a more material efficient product by using an optimized geometry of the hang tab.

Another beneficial feature is that it is possible for adjacent tabs to be configured to share a common edge in combination with a possibility to make all outer comers rounded without having to generate waste material. The only sharp blended edge is interior of the adhesive zone of the piece and this sharp point is not exposed during use.

According to the present invention, there is provided a generally uniplanar adhesive tab for suspension of an object from a support, the tab comprising a generally uniplanar main body (10) having first and second faces on opposite sides thereof, said main body being divided into a first portion (16) provided with a pressure-sensitive adhesive coating on one face thereof, said one face being adapted to be adhered to said object, and a second portion (14) adapted to support the tab with the object adhered thereto from said support, the first and second portions of the generally uniplanar tab being located on opposite sides of a line across the tab; characterized in that the first portion is formed with two legs (18) extending away from said line, the legs (18) defining a channel (20, 26) therebetween.

The reference numerals employed in the preceding paragraph and in the Claims refer to features illustrated in the accompanying drawings, but are not to be taken to have any limiting effect.

In one embodiment the channel has a substantially rectangular configuration. In another embodiment all comers of said hang tab and inner comers of the channel are rounded.

The tab may further be provided with at least two slits extending from a central aperture into the first portion, the slits being provided to resist peeling force during use.

The invention also extends to a method of using a generally uniplanar adhesive tab as aforesaid to suspend an object from a support, the method comprising the steps of: adhering said first portion (16) to a region of said object; and suspending said second portion (14) from said support so that said line is substantially horizontal with said first portion entirely below said second portion on the opposite side of said line and said tab is suspended as a single layer structure substantially in a vertical plane.

The invention provides, in a further aspect thereof, a composite tab structure comprising a protective liner (28) on which a tab substrate defining parallel strips (A, B) of adhesive tabs is mounted, the tab structure being characterised in that two parallel rows (A, B) of tabs as aforesaid are defined on said substrate, the rows being off-set with respect to each other, with two legs (18), one from each of two adjacent tabs in one row (A), being accommodated in a channel (26) of a tab in the other row (B), and between that tab's legs.

The invention extends to a method of making adhesive tabs, characterised in comprising creating a composite tab structure as aforesaid, and cutting both the substrate and the liner (28) to form individual tabs each mounted on a portion of liner. The invention also extends, in the alternative, to a method of making adhesive tabs, characterised in comprising creating a composite tab structure as aforesaid, and cutting separate strips of tabs (A, B) with their legs all extending in the same direction, from said composite tab structure, each strip being mounted on a strip of liner.

In one embodiment tabs of each of two opposing interlocking rows are placed side by side without any gaps left between each adjacent tab and the legs of one row are interlocked within channels between legs of the other row without any gap left within the channels.

In the drawings:-
Fig. 1 shows a plan view of a prior art hang tab provided with an adhesive zone of rectangular configuration.
Fig. 2 shows a prior art assembly of hang tabs where common cutting edges are shared to produce tabs on a continuous sheet of liner.
Fig. 3 shows a configuration of prior art hang tabs where rounded comers are desired, and tabs are produced on continuous roll.
Fig. 4 shows a diagram of the stress distribution of the hang tab of Fig. 1.
Fig. 5 shows a first embodiment of tab according to the present invention.
Fig. 6 shows second embodiment of tab according to the present invention.
Fig. 7 shows a composite tab structure in the form of a two-row assembly of tabs of Fig. 5 on continuous sheet of liner.
Fig. 8 shows a one row assembly of tabs of Fig. 5.
Fig. 9 shows a third embodiment of tab according to the present invention.
Fig. 10 shows a fourth embodiment of tab according to the present invention.
Referring now to the drawings, Fig. 5 shows a tab 10 of a first embodiment of the present invention. Main body portion 12 of tab 10 is divided into an upper non-coated portion 14 provided with a central aperture 22 used for hanging tab 10 with an attached object to a display hook (not shown). Lower portion 16 has legs 18 extending laterally downwardly. A channel 20 is formed between those extended legs 16. In the first embodiment inner comers 21 of channel 20 are rounded. Lower adhesive portion 16 and legs 18 are provided with a pressure sensitive coating. All outer comers 23 of hang tab 10 including legs 18 are rounded to make tab 10 user-friendly. The only one sharp point is an apex 36 located on an interior edge of the adhesive portion 16 within the channel 20. Protective paper liner 17 extends beyond the adhesive zone into the non-coated portion 14 of the tab 10.
It will be appreciated that tab 10 is essentially uniplanar, front surface ofportion 14 (illustrated) and front face of portion 16, with liner 17 over the adhesive, remain in the same orientation when the liner is removed and portion 16 adhered to an object and the tab and adhered object are suspended from a support by portion 14.
Fig. 6 shows a tab 24 of a second embodiment of the present invention, which is similar to Fig. 1, except that all outer comers 27 of tab 24 including legs 18 and inner comers 28 of the rectangular channel 26 are not rounded. In this embodiment the interior edge 29 of the adhesive portion 16 is smooth.

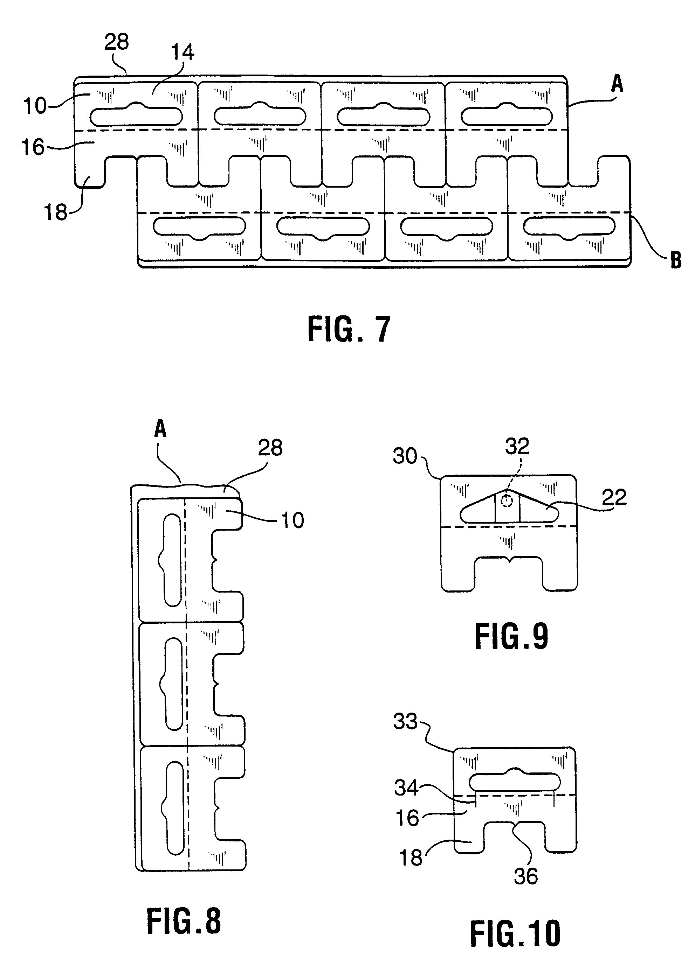

Fig. 7 shows a composite tab structure with arrangements of tabs 10 according to the first embodiment in at least two opposed rows (two being shown) of tabs 10 positioned in a staggered or off-set configuration such that adjacent legs of two tabs from one row are accommodated within a channel formed between legs of one tab of the opposed other row. The shape of this channel 20 can vary greatly depending on degree and depth of interlocking desired between rows. As well, the shape of the channel can be rectangular, angular, convoluted or sub-divided, irregular, etc., within the scope of the present invention. The advantage of such arrangement is absence of any discarded scrap material in the adhesive zone since there are no gaps left between corresponding tabs of said two opposed rows. However, the present invention is not restricted to such preferred arrangement and some gap may be left between tabs of each row or between adjacent legs of tabs of one row accommodated within a channel of one tab of the opposed other row, even though it will produce some scrap material.
Fig. 8 shows another possible configuration of tabs arrangement, which is similar to Fig. 7 except that downstream of a cutting operation, the two rows of Fig. 7 are separated and re-wound on separate strips.
Fig. 9 shows a tab 30 made according to a third embodiment, which is similar to Fig. 5, except for the presence of a bendable flap 32 located in the central region of the central aperture 22. This bendable flap 32 is formed with an opening for suspending said hang tab 30 on a single wire hanger (not shown). The arrangement of said flap 32 is similar to one shown in US 5020761.
Fig. 10 shows a tab 33 made according to a fourth embodiment and is similar to Fig. 5, except for the presence of two expending slots or slits 34 provided to resist peeling forces while in use. Those slots extend into the adhesive portion 16 and are similar in structure to those of the tab of US 5542634.
Tabs in accordance with the present invention are typically made from a synthetic resin, such as PVC, HDPE, PETG, polyethylene or polyethylene terephthalate. The tab substrate or sheet is flexible and relatively thin having a thickness between 0.004 and 0.02 inches (0.01016 to 0.0508 cm).
There are several commonly known methods of manufacturing of adhesive tabs. One of those methods involves rotary die cutting, as described in US 3850059, using a continuously moving web or a sheet material without interrupting the movement of the material. In a typical application, a moving web or sheet of material are passed between a rotary cutting roller and an anvil roller.
Cutting elements or rules are mounted on the cutting roller for rotation therewith. The axis of rotation of the cutting roller and the anvil roller are parallel and displaced by an amount such that at their points of closest proximity the cutting rules penetrate the surface of the web material as the material passes between the rotary die cutting rules and the anvil roller.
The rotary die itself is comprised of rotary steel cutting knives that act as a fixed knife from a solid piece of steel which appears like a cookie cutter used in baking. The die can also be made from a flat, flexible piece of steel and then wrapped and fastened around a steel cylinder to form the rotary die.
As the material passes between the rotary die and the anvil roller, the cutting rules penetrate the surface of the material, and a resistance to penetration of the cutting die into the material must be overcome by the reaction force within the rotary die cutter and the anvil roller. The greater the resistance to penetration, the more stresses the rollers are subjected to. The greater these stresses, the more power required to power the process and the greater the wear on the tooling and support assembly.
The resistance to penetration is greatly affected by the surface toughness of the material being cut and the length of blade that simultaneously penetrates the material at point of contact, as the material passes between the rotary die cutting rules and the anvil roller. The geometry of fabrication is such that the adhesive zone is parallel to the path of the web, and in prior art configurations, where material has been saved by tabs sharing common edges (see Fig. 2), tabs are typically cut butt to butt which results in greater resistance to penetration during fabrication.
The geometry of tabs in accordance with the present invention allows for a staggered cutting die cavity configuration, as shown in Fig. 7, which reduces the stress concentration across the web, so that the tooling and die assembly and equipment are subjected to less stress, while economies of material are achieved. As well, the sides of the tab can be slightly curved to further reduce stress concentration across the web during fabrication.
Another common method of manufacture is flat steel rule die cutting, wherein the material being cut is typically in non-continuous sheet form. Steel rule cutting dies, as described in US 5676032, are commonly used for cutting cloth- like materials, as well as synthetic materials, such as vinyl or the like. A steel rule cutting die typically comprises a base substrate or backing board in which a groove matching the desired pattern to be cut is formed. A length of sharpened blade, known as a steel rule, is formed to the shape of the desired pattern to be cut and is embedded in the corresponding groove in the board. The steel rule has a sharpened cutting edge extending away from the board. A single steel rule cutting die is often constructed with multiple blades or cavities as to enable cutting of multiple patterns with a single pass through the press. Multiple cavities or patterns can be nested together on the substrate in an efficient configuration to minimize scrap.
Tabs in accordance with the present invention could also be produced using this method of manufacture with adjacent cavities sharing common knife blades and the resulting economies of material being achieved.
According to one method for making tabs in accordance with the present invention, an adhesive coating and protective liner of predetermined width and location are applied on a tab substrate or web made of flexible synthetic material, thus forming a composite tab substrate or web. In one embodiment a protective liner extends from said coated area until the far edge of said uncoated area. In another modification, the protective liner extends into said non-coated area. Alternatively, the liner can be zone-coated, i.e. coated with adhesive along a strip, and this composite is then laminated onto the tab web. Several parallel strips of adhesive and liner can be laid down onto the web simultaneously, or for example, to produce sheets containing several rows of tabs. An important feature is the way in which tabs have to be cut from the composite substrate or web. Tabs are arranged on said substrate in at least two opposing interlocking rows A and B, wherein legs 18 of tabs 10 of the row A are facing legs 18 of tabs 10 of the opposite row B, and adj acent legs of two hang tabs of the row A are accommodated within the channel 20 formed between legs of one hang tab 10 from the opposite row B. In the preferred arrangement of Fig. 7 there are neither gaps between each adjacent tab of each row, nor gaps within channels of tabs accommodating legs of tabs from the opposite row. However, the present invention is not restricted to such arrangement and some possible gaps may be left.
In case of using a rotary die cutting method, this composite tab substrate is then passed between a rotary die cutter and anvil roller, wherein the rotary die is configured to produce the tab in several formats by adjusting the depth of cut of the blades.
For example, to produce single loose tabs (see Fig.5), the cutting blades will penetrate all layers of the composite tab substrate around the outer perimeter of each tab. If it is desired to produce tabs in roll form (see Fig. 7), the cutting blades will penetrate the flexible material and adhesive zone, but will not penetrate the liner 28, so that the liner 28 is used as a means of anchoring or attaching tabs onto a continuous strip of liner. If it is desired to produce tabs in sheet form, the cutting blades will penetrate the flexible material and adhesive zone, but will not penetrate the liner within a given area of desired sheet size, and again the liner is used as anchoring means attaching tabs onto the sheet. In any of those modifications, cutting blades may not penetrate some areas of the material fully in order to achieve various desired effects. For example, the central aperture may be hinged by leaving certain portions around its perimeter uncut, thereby reducing the number of loose pieces produced by cutting out a full aperture. Likewise, the liner may be "kiss-cut" in various regions, i.e., the blades can be designed to penetrate the flexible material and/or adhesive zones, without fully penetration the liner so that the liner remains intact where desired.
In case of using a flat steel rule die cut method of manufacture, all steps are the same except that individual sheets are used as opposed to continuous strips or rolls.
One of the advantages of the illustrated tab arrangement is reduction of stress imposed on cutting blades in view of the fact that common cutting edges along vertical sides of one row of tabs are staggered in relationship to common cutting edges along vertical sides of the opposing row.
Other alternative methods, such as laser etching or heated die cutting could be also used to extract the shape and arrangement of the tabs.
Although in the preferred embodiment it is most efficient to use common knife edges between adjacent cavities in the cutting die, it is also falls within the scope of the present invention to extract tabs in a similar interlocking manner, yet leave a slight gap between adjacent cavities. For example, when manufacturing the tab using a male-female type punch and die, the preparation of composite material is fed beneath the die head that may contain multiple cavities where each cavity is separated by gaps of typically 0.050 to 0.250 inches (0.127 to 0.635 cm), or in a multi-step process where gaps are further minimized.
All of the tabs of the above described embodiments are of a type having a through central aperture as a hang means. However, the present invention is not restricted to such arrangement and there are other various hanging or support means that could be used for the same purpose. For example, if an adhesive is coated on upper section 14, then it will be possible to hang a product by the mere force of adhesion without using a rod to pass through an aperture in zone 14.

## Claims

1. A generally uniplanar adhesive tab for suspension of an object from a support, the tab comprising a generally uniplanar main body (10) having first and second faces on opposite sides thereof, said main body being divided into a first portion (16) provided with a pressure-sensitive adhesive coating on one face thereof, said one face being adapted to be adhered to said object, and a second portion (14) adapted to support the tab with the object adhered thereto from said support, the first and second portions of the generally uniplanar tab being located on opposite sides of a line across the tab; **characterized in that** the first portion is formed with two legs (18) extending away from said line, the legs (18) defining a channel (20, 26) therebetween.

2. A tab according to Claim 1, further **characterized in that** the channel (26) has a substantially rectangular configuration.

3. A tab according to Claim 2, further **characterized in that** all comers (23) of said tab and inner comers (21) of said channel (20) are rounded.

4. A tab according to any preceding claim, wherein said second portion (14) has an aperture (22) allowing said tab with said object adhered thereto to hang from said support in use, the tab being further **characterized in** being provided with at least two slits (34) extending from said aperture (22) into said first portion (16), said slits (34) being adapted to resist peeling force during said use.

5. A tab according to any of Claims 1 to 3, **characterised in** further comprising a protective liner (17) covering the whole of said first portion (16), said liner being extended from said first portion (16) into said second portion (14) to facilitate easy removal of said liner (17) before adhesion of said first portion to said object in use.

6. A tab according to any of Claims 1 to 3, further **characterised in that** said second portion 14 has an aperture (22) provided with a central bendable flap (32) formed with an opening (32) within a central region of said aperture (22), said opening allowing said tab with said object adhered thereto to hang from said support in the form of a single wire hanger in use.

7. A tab according to any of Claims 1 to 3, further **characterised in that** said second portion is formed without aperture, and **in that** said second portion has adhesive applied thereto, allowing said tab with said object adhered to said first portion to be supported from said support by said adhesive on said second portion.

8. A method of using a generally uniplanar adhesive tab according to Claim 1 to suspend an object from a support, the method comprising the steps of: adhering said first portion (16) to a region of said object; and suspending said second portion (14) from said support so that said line is substantially horizontal with said first portion entirely below said second portion on the opposite side of said line and said tab is suspended as a single layer structure substantially in a vertical plane.

9. A composite tab structure comprising a protective liner (28) on which a tab substrate defining parallel strips (A, B) of adhesive tabs is mounted, the tab structure being **characterised in that** two parallel rows (A, B) of tabs according to Claim 1 are defined on said substrate, the rows being off-set with respect to each other, with two legs (18), one from each of two adjacent tabs in one row (A), being accommodated in a channel (26) of a tab in the other row (B), and between that tab's legs.

10. A composite tab structure according to Claim 8, further **characterised in that** the tabs of each row (A, B) are arranged without any space between adjacent tabs.

11. A composite tab structure according to Claim 9 or Claim 10, further **characterised in that** said tab substrate comprises an elongate adhesive applied region corresponding to the first portions (16) of the tabs in the two said rows (A, B) separating two parallel elongate regions without adhesive applied.

12. A composite tab structure according to any of Claims 9,10 or 11, further **characterised in that** individual tabs are cut from each other, but the liner (28) remains uncut, thereby retaining the tabs in their rows on the liner.

13. A method of making adhesive tabs, **characterised in** comprising creating a composite tab structure according to any of Claims 9, 10 or 11, and cutting both the substrate and the liner (28) to form individual tabs each mounted on a portion of liner.

14. A method of making adhesive tabs, **characterised in** comprising creating a composite tab structure according to any of Claims 9, 10 or 11, and cutting separate strips of tabs (A, B) with their legs all extending in the same direction, from said composite tab structure, each strip being mounted on a strip of liner.

## Patentansprüche

1. Ein im Wesentlichen ebenflächiger Klebesteifen zum Aufhängen eines Gegenstands an einer Halterung, wobei der Streifen einen im Wesentlichen ebenflächigen Hauptkörper (10) besitzt, mit einer ersten und einer zweiten Fläche auf entgegen gesetzten Seiten, wobei der Hauptkörpeer in einen ersten Abschnitt (16), der auf einer Seite mit einer druckempfindlichen Klebebeschichtung ausgestattet ist, a-wobei die Seite dazu geeignet ist, auf den Gegenstand zu geklebt zu werden, und in einen zweiten Abschnitt (14) geteilt ist, der dazu geeignet ist, den Streifen mit dem daran klebenden Gegenstand an der Halterung aufzuhängen, wobei der erste und der zweite Abschnitt des im Wesentlichen ebenflächigen Streifens auf entgegen gesetzten Seiten einer Linie quer über den Streifen angeordnet sind; **dadurch gekennzeichnet, dass** der erste Abschnitt mit zwei Beinen (18) ausgebildet ist, die sich weg von der Linie erstrecken, wobei die Beine (18) zwischen sich einen Kanal (20, 26) definieren.

2. Streifen nach Anspruch 1, weiter **gekennzeichnet dadurch, dass** der Kanal (26) eine im Wesentlichen rechteckige Form besitzt.

3. Streifen nach Anspruch 2, weiter **gekennzeichnet dadurch, dass** alle Ecken (23) des Streifens und die inneren Ecken (21) des Kanals (20) abgerundet sind.

4. Streifen nach einem der vorhergehenden Ansprüche, wobei de zweite Abschnitt (14) eine Öffnung (22) besitzt, die es erölaubt, den Streifen mit dem an diesen geklebten Gegenstand bei Benutzung an der Halterung aufzuhängen, wobei der Streifen weiter **dadurch gekennzeichnet ist, dass** er wenigstens zwei Schlitze (34) besitzt, die sich von der Öffnung (22) in de den ersten Abschnitt (16) erstrecken, wobei die Schlitze (34) dazu geeignet sind, während des Gebrauchs einer Scherkraft zu widerstehen.

5. Streifen nach einem der Ansprüche 1 bis 3, **dadurch gekennzeichnet, dass** er weiter einen Schutzüberzug (17) besitzt, der den ganzen ersten Abschnitt (16) bedeckt, wobei der Überzug von dem ersten Abschnitt (16) in den zweiten Abschnitt (14) verlängert ist, um das leichte Entfernen des Überzugs (17) vor dem Kleben des ersten Abschnitts an den Gegenstand bei dem Gebrauch zu ermöglichen.

6. Streifen nach einem der Ansprüche 1 bis 3, weiter **gekennzeichnet dadurch, dass** der zweite Abschnitt (14) eine Öffnung (22) besitzt, die mit einer mittleren biegbaren Lasche (32) versehen ist, die mit einem Loch (32) im Mittelbereich der Öffnung (22) ausgebildet ist, wobei das Loch es dem Streifen ermöglicht, bei Benutzung mit dem an ihm klebenden Gegenstand an der Halterung in Form eines einzelnen Hängedrahts zu hängen.

7. Streifen nach einem der Ansprüche 1 bis 3, weiter **gekennzeichnet dadurch, dass** der zweite Abschnitt ohne Öffnung ausgebildet ist und dass der zweite Abschnitt einen Klebeauftrag aufweist, der es erlaubt, den Streifen mit dem an dessen ersten Abschnitt klebenden Gegenstand durch den Kleber auf dem zweiten Abschnitt an der Halterung zu hängen.

8. Verfahren zur Verwendung eines im Wesentliche ebenflächigen Klebestreifens gemäß Anspruch 1 zum Aufhängen eines Gegenstands an einer Halterung, wobei das Verfahren die Schritte umfasst: Kleben des ersten Abschnitts (16) auf einen Bereich des Gegenstands; und Aufhängen des zweiten Abschnitts (14) an einer Halterung, so dass die Linie im Wesentlichen horizontal mit dem ersten Abschnitt liegt, der vollständig unterhalb des zweiten Abschnitts auf den entgegen gesetzten Seite der Linie liegt und wobei der Streifen als einschichtige Struktur im Wesentlichen in einer vertikalen Ebene hängt.

9. Streifenverbundstruktur, bestehend aus einem Schutzüberzug (28), an dem ein Streifensubstrat aus parallelen Streifen (A, B) von Klebestreifen angeordnet ist, wobei die Streifenstruktur **dadurch gekennzeichnet ist, dass** zwei parallele Reihen (A, B) von Streifen gemäß Anspruch 1 auf dem Substrat definiert sind, wobei die Reihen zueinander versetzt sind, wobei zwei Beine (18), eines jeweils von benachbarten Streifen einer Reihe (A) in einem Kanal (26) eines Streifens in der anderen Reihe (B) zwischen den Beinen dieses Streifens aufgenommen sind.

10. Streifenverbundstruktur nach Anspruch 8, weiter **gekennzeichnet dadurch, dass** die Streifen jeder Reihe (A, B) ohne jeden Zwischenraum zwischen benachbarten Streifen angeordnet sind.

11. Streifenverbundstruktur nach Anspruch 9 oder 10, weiter **gekennzeichnet dadurch, dass** die Streifenstruktur einen länglichen Bereich mit Klebstoffauftrag besitzt, die den ersten Abschnitten (16) der Streifen in den zwei Reihen (A, B) entspricht und die zwei parallele längliche Bereiche trennt, auf denen kein Klebstoff aufgebracht ist.

12. Streifenverbundstruktur nach einem der Ansprüche 9, 10 oder 11, weiter **gekennzeichnet dadurch, dass** einzelne Streifen voneinander abgeschnitten werden, jedoch der Überzug (28) ungeschnitten bleibt und dabei die Streifen in ihren Reihen auf dem Überzug festhält.

13. Verfahren zur Herstellung von Klebestreifen, **dadurch gekennzeichnet, dass** es die Schaffung einer Streifenverbundstruktur entsprechend einem der Ansprüche 9, 10 oder 11 aufweist und dass sowohl das Substrat, als auch der Überzug (28) geschnitten werden, um einzelne Streifen zu bilden, die jeweils an einem Überzugsabschnitt angeordnet sind.

14. Verfahren zur Herstellung von Klebestreifen, **dadurch gekennzeichnet, dass** eine Streifenverbundstruktur gemäß einem der Ansprüche 9, 10 oder 11 geschaffen wird und dass einzelne Streifen von Streifen (A, B) geschnitten werden, deren Beine alle von der Streifenverbundstruktur in die gleiche Richtung zeigen, wobei jeder Streifen an einem Überzugsstreifen angeordnet ist.

## Revendications

1. Patte adhésive plane de façon générale, destinée à la suspension d'un objet à un support, la patte comportant un corps principal (10) plan de façon générale, ayant des première et seconde faces à ses côtés opposés, le corps principal étant divisé en une première partie (16) qui a un revêtement adhésif sensible à la pression sur une face, cette face étant destinée à être collée à l'objet, et une seconde partie (14) destinée à supporter la patte alors que l'objet lui est collé, à l'aide du support, les première et seconde parties de la patte de forme générale plane étant placées sur les côtés opposés d'une droite recoupant la patte, **caractérisée en ce que** la première partie est formée de deux branches (18) qui s'écartent de la droite, les branches (18) délimitant entre elles un canal (20, 26).

2. Patte selon la revendication 1, **caractérisée en outre en ce que** le canal (26) a une configuration pratiquement rectangulaire.

3. Patte selon la revendication 2, **caractérisée en outre en ce que** tous les coins (23) de la patte et les coins internes (21) du canal (20) sont arrondis.

4. Patte selon l'une quelconque des revendications précédentes, dans laquelle la seconde partie (14) a une ouverture (22) permettant à la patte à laquelle est collé l'objet d'être suspendue au support pendant l'utilisation, la patte étant en outre **caractérisée en ce qu'**elle comporte au moins deux fentes (34) qui s'étendent depuis l'ouverture (22) dans la première partie (16), les fentes (34) étant destinées à résister à une force de pelage pendant l'utilisation.

5. Patte selon l'une quelconque des revendications 1 à 3, **caractérisée en ce qu'**elle comporte en outre une doublure protectrice (17) qui recouvre la totalité de la première partie (16), la doublure s'étendant depuis la première partie (16) dans la seconde partie (14) pour faciliter l'enlèvement de la doublure (17) avant l'adhérence de la première partie à l'objet pendant l'utilisation.

6. Patte selon l'une quelconque des revendications 1 à 3, **caractérisée en outre en ce que** la seconde partie (14) a une ouverture (22) ayant un volet central (32) qui peut fléchir et qui a un orifice (32) dans une région centrale de l'ouverture (22), l'orifice permettant à la patte à laquelle l'objet est collé d'être suspendue au support sous forme d'un organe de suspension à un seul fil pendant l'utilisation.

7. Patte selon l'une quelconque des revendications 1 à 3, **caractérisée en outre en ce que** la seconde partie est formée sans ouverture, et **en ce que** la seconde partie a un adhésif qui lui est appliqué et qui permet à la patte à laquelle l'objet adhère à la première partie d'être supportée par le support grâce à l'adhésif de la seconde partie.

8. Procédé de mise en oeuvre d'une patte adhésive plane de façon générale selon la revendication 1 pour la suspension d'un objet à un support, le procédé comprenant les étapes suivantes : le collage de la première partie (16) à une région de l'objet, et la suspension de la seconde partie (14) au support de manière que la droite soit pratiquement horizontale, la première partie étant entièrement au-dessous de la seconde partie du côté opposé de la droite et la patte étant suspendue sous forme d'une structure à une seule couche pratiquement dans un plan vertical.

9. Structure composite de pattes comprenant une doublure protectrice (28) sur laquelle est monté un substrat de pattes délimitant des bandes parallèles (A, B) de pattes adhésives, la structure de pattes étant **caractérisée en ce que** deux rangées parallèles (A, B) de patte selon la revendication 1 sont délimitées sur le substrat, les rangées étant décalées l'une par rapport à l'autre, les deux branches (18), une de chacune de deux pattes adjacentes d'une rangée (A), étant logées dans un canal (26) d'une patte de l'autre rangée (B) et entre les branches de la patte.

10. Structure composite de pattes selon la revendication 8, **caractérisée en outre en ce que** les pattes de chaque rangée (A, B) sont disposées sans espace entre les pattes adjacentes.

11. Structure composite de pattes selon la revendication 9 ou 10, **caractérisée en ce que** le substrat de patte comporte une région allongée d'application d'adhésif correspondant aux premières parties (16) des pattes des deux rangées (A, B) séparant deux régions parallèles allongées sans application d'adhésif.

12. Structure composite de pattes selon l'une quelconque des revendications 9, 10 et 11, **caractérisée en outre en ce que** les pattes individuelles sont découpées les unes par rapport aux autres, mais la doublure (28) reste sans découpe, si bien qu'elle retient les pattes dans les rangées sur la doublure.

13. Procédé de fabrication de patte adhésive, **caractérisé en ce qu'**il comprend la création d'une structure composite de pattes selon l'une quelconque des revendications 9, 10 et 11, et la découpe à la fois du substrat et de la doublure (28) pour la formation de pattes individuelles montées chacune sur une partie de doublure.

14. Procédé de fabrication de patte adhésive, **caractérisé en ce qu'**il comprend la création d'une structure composite de pattes selon l'une quelconque des revendications 9, 10 et 11, et la découpe de bandes séparées de pattes (A, B) dont les branches s'étendent toutes dans la même direction, depuis la structure composite de pattes, chaque bande étant montée sur une bande de doublure.
